# EUROPÄISCHE PATENTSCHRIFT

(11) **EP 2 848 558 B1**
(45) Veröffentlichungstag und Bekanntmachung des Hinweises auf die Patenterteilung: **30.03.2016**
(21) Anmeldenummer: 14002868.9
(22) Anmeldetag: 18.08.2014
(51) Int. Cl.: B65G 11/12, B29C 49/42, B65G 47/14

(54) **Justiersystem**
Adjusting system
Système d'ajustage

(30) Priorität: 16.09.2013 CH 15872013
(43) Veröffentlichungstag der Anmeldung: 18.03.2015
(73) Patentinhaber: M. Tanner AG, 8308 Illnau (CH)
(72) Erfinder: Tanner, Marcel, CH- 8303 Bassersdorf (CH)
(74) Vertreter: Schaad, Balass, Menzl & Partner AG

(56) Entgegenhaltungen:
- DE-A1-102009 016 593

## Beschreibung

Die Erfindung betrifft ein System zum Justieren von zumindest der Höheneinstellung zwischen einer ersten Transporteinrichtung, etwa einer Ablaufschiene, und einer zweiten Transporteinrichtung, etwa eines Rollensortierers, in einer Transportstrecke für Vorformlinge für Kunststoffbehälter.
Eine bespielhafte Transportstrecke für Vorformlinge für etwa PET-Flaschen wird in der EP 1925 575 A1 beschrieben.

Die DE 10 2009 016 593 A1 offenbart eine Transportstrecke für Vorformlinge, wobei eine erste Transporteinrichtung zumindest eine Auslaufeinheit zur Übernahme von Vorformlingen von einer zweiten Transporteinrichtung sowie eine Schieneneinheit zum Weitertransport der Vorformlinge aufweist.

Bislang war das dem Rollensortierer zugewandte Ende Ablaufschiene in einer Kreuzführung fest mit dem Rollensortierer verbunden. Dies bedeutete, dass für jeden Grössen- bzw. Sortenwechsel der Vorformlinge ein Monteur mit Hilfe eines Werkzeugs die Kreuzführung manuell lösen, neu einstellen und wieder festziehen musste. Dies führte zu signifikanten Umrüst- bzw. Stillstandzeiten der gesamten Anlage. Für den Übergangsbereich vom Rollensortierer zu der Ablaufschiene bedarf es überdies einer sehr feinen Abstimmung, damit die Vorformlinge hier nicht verwackeln bzw. verkeilen und sich gegenseitig blockieren. Es besteht weiterhin ein Bedürfnis nach einer gut reproduzierbaren Feinabstimmung in diesem Bereich.
Es ist daher die Aufgabe der vorliegenden Erfindung, ein Justiersystem bereitzustellen, mit dem ein schnelles, zuverlässiges und gleichzeitig aber auch genaues Umstellen von einer Vorformlingsgrösse bzw. -sorte auf eine andere ermöglicht wird.

Diese Aufgabe wird in Übereinstimmung mit der vorliegenden Erfindung gelöst durch ein System zum Justieren von zumindest der Höheneinstellung zwischen einer ersten Transporteinrichtung und einer zweiten Transporteinrichtung in einer Transportstrecke für Vorformlinge für Kunststoffbehälter, wobei die erste Transporteinrichtung zumindest eine Auslaufeinheit zur Übernahme von Vorformlingen von der zweiten Transporteinheit sowie eine Schieneneinheit zum Weitertransport der Vorformlinge aufweist, wobei die Auslaufeinheit einerseits mit der Schieneneinheit verbunden ist und andererseits frei beweglich gegenüber der zweiten Transporteinrichtung angeordnet ist, und wobei die erste und die zweite Transporteinrichtung über eine Justiereinheit miteinander verbunden sind, wobei mittels der Justiereinheit zumindest die Auslaufeinheit in ihrer Höhe gegenüber der zweiten Transporteinrichtung verstellbar ist.

Die Formulierung, dass die Auslaufeinheit frei beweglich gegenüber der zweiten Transporteinrichtung angeordnet ist bedeutet vorliegend, dass sie die zweite Transportvorrichtung gerade nicht berührt, aber nahe genug an diese heranreicht, um einen störungsfreien Übergang der Vorformlinge von der zweiten Transporteinrichtung auf die Auslaufeinheit sicherzustellen.

In einer bevorzugten Ausführungsform der vorliegenden Erfindung weist die Auslaufeinheit der ersten Transporteinrichtung eine Krümmung auf. Mittels dieser Krümmung werden die betriebsbedingt unterschiedlichen Neigungswinkel der ersten Transporteinrichtung und der zweiten Transporteinrichtung besonders effizient ausgeglichen. Die erste Transporteinrichtung (z.B. eine Ablaufschiene) weist in der Regel eine grössere Neigung auf als die zweite Transporteinrichtung (z.B. ein Rollensortierer), um ggf. ein Ablösen der Vorformlinge voneinander zu begünstigen und so die Vereinzelung insgesamt effizienter gestalten zu können. Zudem können so die Vorformlinge, welche ggf. von den Rollen bzw. Walzen des Rollensortierers auf die Auslaufeinheit fallen, praktisch ungestört und verwacklungsfrei auf der Auslaufeinheit weiterbefördert werden.

In einer weiteren bevorzugten Ausführungsform der vorliegenden Erfindung weist die Justiereinheit einen beweglichen Schlitten auf, welcher mit der ersten Transporteinheit verbunden, vorzugsweise verschraubt, ist. Besonders bevorzugt weist dabei die erste Transporteinrichtung ein Tragprofil auf, welches ggf. oberhalb der Schieneneinheit montiert ist und mit welchem der bewegliche Schlitten verbunden, vorzugsweise verschraubt, ist. Das Tragprofil ist dabei vorteilhaft in Form eines C-Profils ausgestaltet. Das Tragprofil dient insbesondere der Stabilisierung der Schieneneinheit, welche im Wesentlichen nur aus zwei Z-Profilen besteht.

Besonders bevorzugt ist der bewegliche Schlitten an zumindest einer Führungsstange der Justiereinheit gelagert. Weiter vorzugsweise ist der bewegliche Schlitten über eine Justierschraube entlang der zumindest einen Führungsstange bewegbar. Durch die vorstehend genannten Massnahmen kann die berührungsfreie Anordnung der Auslaufeinheit an der zweiten Transporteinrichtung bzw. dem Rollensortierer sowie deren Justierung auf konstruktiv einfache wie zuverlässige Weise erreicht werden.

Im Übrigen ist die Justierschraube bevorzugt mit einer digitalen Anzeigevorrichtung versehen bzw. gekoppelt, um die notwendige Feinjustierung (üblicherweise im Bereich von wenigen Millimetern oder 1/10 Millimetern) präzise vornehmen zu können. In einer anderen bevorzugten Ausführungsform können die Justierschraube und die digitale Anzeigevorrichtung so ausgestaltet sein, dass mit jeder Verstellung um einen Millimeter bzw. einen 1/10 Millimeter eine Raststufe überwunden wird, so dass der Maschinenführer auch ein akustisches und ggf. haptisches Feedback erhält.

Besonders bevorzugt verläuft jedoch die Justierschraube der Justiereinheit zwischen zwei Führungsstangen entlang derer der bewegliche Schlitten bewegt wird. Insofern hat es sich als zweckmässig erwiesen, wenn der bewegliche Schlitten eine im Wesentlichen H-förmige Ausgestaltung aufweist. Von der Unterseite des Querbalkens des beweglichen Schlittens ragen weiter vorzugsweise zwei Plättchen ab, mittels derer der bewegliche Schlitten mit dem Tragprofil verbunden, vorzugsweise verschraubt, ist.

In einer noch weiteren bevorzugten Ausführungsform der vorliegenden Erfindung weist die erste Transporteinheit eine verstellbare Höhenführung auf. Die Höhenführung weist vorzugsweise eine Justierschraube auf, welche bevorzugt wiederum mit einer digitalen Anzeigevorrichtung (im Millimeter- oder 1/10 Millimeterbereich) versehen bzw. gekoppelt ist. Die Justierschraube und die digitale Anzeigevorrichtung können in einer anderen bevorzugten Ausführungsform so ausgestaltet sein, dass mit jeder Verstellung um einen Millimeter bzw. einen 1/10 Millimeter eine Raststufe überwunden wird, so dass der Maschinenführer auch ein akustisches und ggf. haptisches Feedback erhält.

In einer nochmals anderen bevorzugten Ausführungsform der vorliegenden Erfindung weist die erste Transporteinrichtung eine Breiteneinstellung - etwa in Form einer Justierschraube - auf, welche vorzugsweise ebenfalls mit einer digitalen Anzeigevorrichtung versehen bzw. gekoppelt ist. Für eine störungsfreie Weiterförderung der Vorformlinge muss gleichermassen auch die Breite der Ablaufschiene sehr fein auf die Breite der jeweiligen Vorformlingsgrösse bzw. -sorte einstellbar sein. In einer anderen bevorzugten Ausführungsform können die Justierschraube und die digitale Anzeigevorrichtung so ausgestaltet sein, dass mit jeder Verstellung um einen Millimeter bzw. einen 1/10 Millimeter eine Raststufe überwunden wird, so dass der Maschinenführer auch ein akustisches und ggf. haptisches Feedback erhält.

In einer wiederum anderen bevorzugten Ausführungsform der vorliegenden Erfindung ist die Justiereinheit zumindest über ein U-förmiges Verbindungsstück fest mit der zweiten Transporteinrichtung verbunden. In der Regel sind jeweils die unteren und oberen Enden der beiden Führungsstangen jeweils in ein U-förmiges Verbindungsstück eingeschraubt, welches mit seinen beiden freien Enden an der zweiten Transportvorrichtung (d.h. in der Regel an dem Rollensortierer) befestigt ist. Diese Ausgestaltung trägt den räumlichen Gegebenheiten am besten Rechnung und sorgt gleichzeitig für eine hohe Stabilität.

Wie bereits vorstehend angesprochen, ist die erste Transporteinrichtung vorzugsweise eine Ablaufschiene und die zweite Transporteinrichtung vorzugsweise ein Rollensortierer.

Bevorzugt weist schliesslich die Ablaufschiene an ihrer Unterseite eine Schutzvorrichtung auf. Die Schutzvorrichtung dient regelmässig als Kopfschutz und besteht aus einem vorzugsweise schmalen Profil, welches an den Seiten eine Abrundung aufweist. Die Abrundungen können an ihrer Aussenseite eine Gummierung aufweisen.

Eine beispielhafte Ausführungsform der vorliegenden Erfindung wird im Hinblick auf eine bessere Anschaulichkeit in den beiliegenden Zeichnungen illustriert.

Es zeigt:
- Fig. 1: eine Seitenansicht eines Justiersystems nach dem Stand der Technik mit fest angeschraubter Auslaufeinheit;
- Fig. 2: eine Seitenansicht eines erfindungsgemässen Justiersystems mit loser Auslaufeinheit;
- Fig. 3: eine Frontalansicht eines erfindungsgemässen Justiersystems, insbesondere von dessen Justiereinheit; und
- Fig. 4: eine Frontalansicht der Schieneneinheit eines erfindungsgemässen Justiersystems.

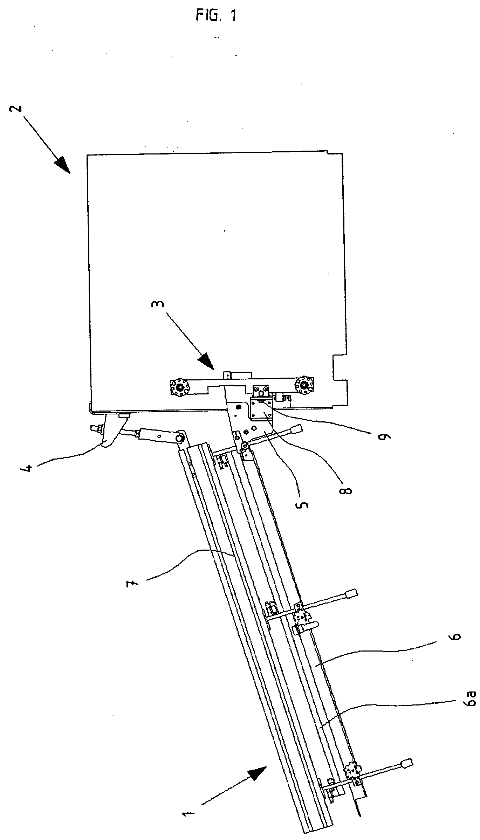

Das bekannte Justiersystem gemäss Fig. 1 umfasst zunächst eine Ablaufschiene 1 und einen Rollensortierer 2, welche über eine Kreuzführung 3 sowie über eine separate Einstelleinrichtung 4 fest miteinander verbunden sind.

Die Ablaufschiene 1 umfasst eine Schiene 6 mit einer Auslaufeinheit 5, sowie eine oberhalb der Schiene 6 angeordnete Höhenführung 6a für die vom Rollensortierer 2 kommenden Vorformlinge. Oberhalb der Höhenführung 6a ist zudem ein Profil 7 montiert, an dem ein Ende der Einstelleinrichtung 4 angelenkt ist. Das andere Ende der Einstelleinrichtung 4 ist am Maschinengestell des Rollensortierers 2 abgestützt.

Die Auslaufeinheit 5 ist mittels der Kreuzführung 3 fest am Rollensortierer 2 verschraubt. Zur Änderung der Höheneinstellung der Auslaufeinheit 5 sowie der Schiene 6 gegenüber dem Rollensortierer 2 muss der Maschinenführer die in einem Langloch des Winkelelements 8 geführte Schraube 9 lösen und die Auslaufeinheit 5 zusammen mit der Schiene 6 nach oben oder nach unten bewegen und anschliessend die Schraube 9 wieder anziehen. Je nach Ausmass der Höhenänderung muss ggf. auch noch die an dem Profil 7 angelenkte Einstelleinrichtung 4, welche an ihrem rollensortiererseitigen Ende regelmässig in Form eines Gewindebolzens ausgebildet ist, nachgezogen werden. Hierzu werden jeweils geeignete Werkzeuge benötigt.

Da Umstellungen auf unterschiedliche Vorformlingsgrössen in der Praxis unter Umständen mehrmals am Tag vorgenommen werden müssen, kommt es bei dieser Sorte von Justiersystem mitunter zu signifikanten Umrüst- und Stillstandszeiten. Zudem hängt die Reproduzierbarkeit der einzelnen Einstellungen allein vom Geschick des jeweiligen Monteurs bzw. Maschinenführers ab.

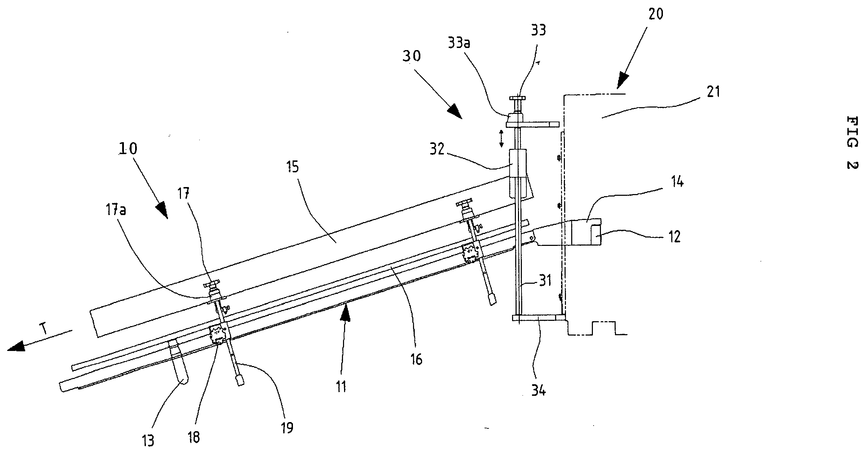

Fig. 2 zeigt nun ein erfindungsgemässes System zum Justieren von zumindest der Höheneinstellung zwischen einer ersten Transporteinrichtung 10 (d.h. in der Regel einer Ablaufschiene) und einer zweiten Transporteinrichtung 20 (d.h. in der Regel einem Rollensortierer) in einer Transportstrecke für Vorformlinge 13 für Kunststoffbehälter. Die erste Transporteinrichtung 10 ist in Transportrichtung T geneigt.

Die Ablaufschiene 10 weist dabei zumindest eine Auslaufeinheit 12 zur Übernahme von Vorformlingen 13 von dem Rollensortierer 20 sowie eine Schieneneinheit 11 zum Weitertransport der Vorformlinge 13 auf. Die Auslaufeinheit 12 ist dabei einerseits (i.d.R. fest) mit der Schieneneinheit 11 verbunden und andererseits frei beweglich gegenüber dem Rollensortierer 20 angeordnet. Wie zu sehen, ragt die Auslaufeinheit 12 dabei ein Stück weit in das Maschinengestell 21 des Rollensortierers 20 hinein.

Allerdings berührt die Auslaufeinheit 12 den Rollensortierer 20 nicht, denn dies könnte ggf. zu einer ungewollten Fehljustierung führen aufgrund von Kräften, die eventuell von dem Rollensortierer 20 in die Auslaufeinheit 12 eingeleitet werden. Die Auslaufeinheit 12 weist zudem eine Krümmung 14 bzw. eine gekrümmte Auflagefläche für die Vorformlinge 13 bzw. die Kragen der Vorformlinge auf, damit diese, wenn sie von den Transportrollen oder -walzen (nicht gezeigt) des Rollensortierers 20 herunter auf die Auslaufeinheit 12 fallen, ungebremst bzw. ungestört weitertransportiert werden können.

Die erste und die zweite Transporteinrichtung 10, 20 sind über eine Justiereinheit 30 (i.d.R. fest) miteinander verbunden, wobei mittels der Justiereinheit 30 zumindest die Auslaufeinheit 12 (und ggf. die damit verbundene) Schieneneinheit 11) in ihrer Höhe gegenüber der zweiten Transporteinrichtung 20 verstellbar ist (sind).

Zu diesem Zweck weist die Justiereinheit 30 einen beweglichen Schlitten 32 auf, welcher an Führungsstangen 31 gelagert ist. Der bewegliche Schlitten 32 kann über eine Justierschraube 33 am oberen Ende der Justiereinheit betätigt, d.h. nach oben oder nach unten bewegt, werden. Die Justierschraube 33 ist mit einer digitalen Anzeigevorrichtung 33a versehen, was eine genaue Reproduzierbarkeit der einzelnen Einstellungen für die unterschiedlichen Vorformlingsgrössen gewährleistet.

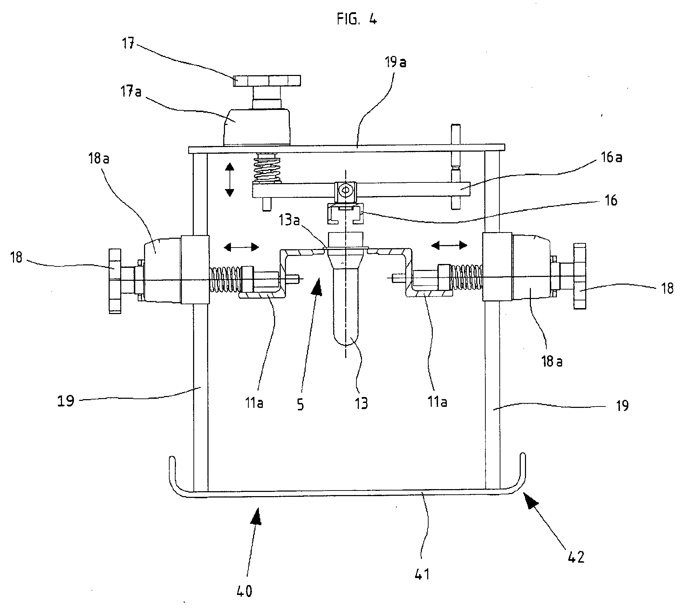

Die Führungsstangen 31 erstrecken sich zwischen zwei U-förmigen Verbindungsstücken 34, mit denen die Justiereinheit 30 fest am Rollensortierer 20 befestigt ist. Der bewegliche Schlitten 32 ist mit dem Tragprofil 15 der Ablaufschiene 10 verbunden, vorzugsweise verschraubt. Das Tragprofil 15 ist über die Halterungsstangen 19 mit der Schieneneinheit 11 verbunden, wobei das Tragprofil 15 auf Querstreben 19a (vgl. Fig. 4) montiert ist, welche sich zwischen zwei gegenüberliegenden Halterungsstangen 19 erstrecken.

Auf den Querstreben 19a ist auch die Justierschraube 17 mit der digitalen Anzeigevorrichtung 17a zur Einstellung der Höhenführung 16 angeordnet. Die Höhenführung 16 ist zwischen dem Tragprofil 15 und der Schieneneinheit 11 für die Vorformlinge 13 angeordnet. An den Halterungsstangen 19 ist ausserdem die Breiteneinstellung 18 für die Schieneneinheit 11 und die Auslaufeinheit 12 vorgesehen.

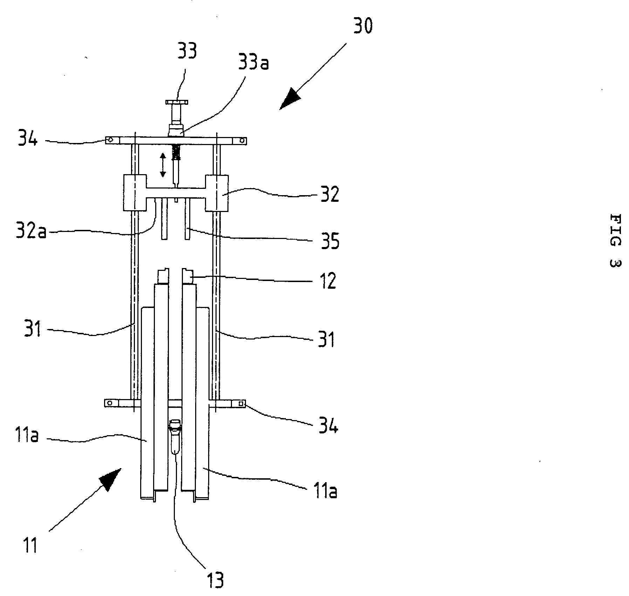

Die Frontalansicht gemäss **Fig. 3** veranschaulicht insbesondere die Wirkungsweise der Justiereinheit 30. Deren Gerüst besteht aus den beiden U-förmigen Verbindungsstücken 34, mit welchen die Justiereinheit 30 oberhalb und unterhalb der Auslaufeinheit 12 an dem Rollensortierer 20 befestigt ist, sowie den sich zwischen den beiden U-förmigen Verbindungsstücken 34 erstreckenden Führungsstangen 31. An den Führungsstangen 31 ist der bewegliche Schlitten 32, welcher regelmässig eine H-förmige Ausgestaltung aufweist, gelagert.

Der Schlitten 32 wird über die Justierschraube 33 bewegt, welche sich durch das obere U-förmige Verbindungsstück 34 sowie durch eine korrespondierende Gewindebohrung im Querbalken 32a des H-förmigen Schlittens 32 erstreckt. Die Justierschraube 33 weist eine digitale Anzeigevorrichtung 33a auf und ist so in der Lage, den beweglichen Schlitten 32 über 1 mm, vorzugsweise 1/10 mm, Klickrasten in der Vertikalen zu bewegen. Von der Unterseite des Querbalkens 32a des beweglichen Schlittens 32 ragen zwei Plättchen 35 ab, mittels derer der bewegliche Schlitten 32 mit dem Tragprofil 15 verbunden, vorzugsweise verschraubt, ist.

Zwischen den beiden Führungsstangen 31 und unterhalb der Plättchen 35 erkennt man die Auslaufeinheit 12, an welche sich die beiden Z-Profile 11a der Schieneneinheit 11 anschliessen. Zwischen den beiden Z-Profilen 11a wird ein Vorformling 13 geführt, welcher, wie üblich, mit seinem Kragen jeweils auf der Oberseite der Z-Profile 11a aufliegt.

**Fig. 4** stellt eine Schnittansicht durch die erste Transporteinheit 10 (ohne das Tragprofil 15) dar. Hier wird insbesondere die Justierung der Höhenführung 16 sowie die Justierung der Breiteneinstellung 18 illustriert.

Die Höhenführung 16, welche regelmässig als C-Profil ausgestaltet ist, ist über einen Querbalken 16a - welcher unterhalb der Querstrebe 19a, welche die Halterungsstangen 19 miteinander verbindet, angeordnet ist - mit der Justierschraube 17 in Wirkverbindung. Die Justierschraube 17 weist wiederum eine digitale Anzeigevorrichtung 17a auf und ist so ggf. in der Lage, die Höhenführung 16 über 1 mm, vorzugsweise 1/10 mm, Klickrasten in der Vertikalen zu bewegen. Die Höhenführung 16 ist vorzugsweise dicht über der Mündungsöffnung der Vorformlinge 13 angeordnet.

Die Justierschrauben 18 zur Einstellung des durch die Z-Profile 11a gebildeten Führungsspalts S bzw. zur Breiteneinstellung sind an den Halterungsstangen 19 montiert und mit den Z-Profilen 11a verbunden. Der Führungsspalt S ist regelmässig etwas kleiner als der Durchmesser des Kragen 13a des jeweils geführten Vorformlings 13. Die Justierschrauben 18 weisen ebenfalls digitale Anzeigevorrichtungen 18a auf und sind so in der Lage, die Z-Profile 11a über 1 mm, vorzugsweise 1/10 mm, Klickrasten in der Horizontalen zu bewegen.

Am unteren Ende der Halterungsstangen 19 ist eine Kopfschutzvorrichtung 40 montiert. Diese besteht aus einem vorzugsweise schmalen Profil 42, welches an den Seiten eine Abrundung 42 aufweist. Auf diese Weise kann die Verletzungsgefahr für den Maschinenführer und andere Personen jedenfalls verringert werden.

### Bezugszeichenliste:

- 1: Ablaufschiene
- 2: Rollensortierer
- 3: Kreuzführung
- 4: Einstelleinrichtung
- 5: Auslaufeinheit
- 6: Schiene
- 6a: Höhenführung
- 7: Profil
- 8: Winkelelement
- 9: Schraube
- 10: erste Transporteinrichtung (Ablaufschiene)
- 11: Schieneneinheit
- 11a: Z-Profile
- 12: Auslaufeinheit
- 13: Vorformling
- 13a: Kragen
- 14: Krümmung
- 15: Tragprofil
- 16: Höhenführung
- 16a: Querstange
- 17: Justierschraube
- 17a: digitale Anzeigevorrichtung
- 18: Breiteneinstellung/Justierschraube
- 18a: digitale Anzeigevorrichtung
- 19: Halterungsstangen
- 19a: Querstreben
- 20: zweite Transporteinrichtung (Rollensortierer)
- 21: Maschinengehäuse
- 30: Justiereinheit
- 31: Führungsstangen
- 32: beweglicher Schlitten
- 32a: Querbalken
- 33: Justierschraube
- 33a: digitale Anzeigevorrichtung
- 34: U-förmiges Verbindungsstück
- 35: Plättchen
- 40: Kopfschutz
- 41: Profil (schmal)
- 42: Abrundung
- S: Führungsspalt
- T: Transportrichtung

## Patentansprüche

1. System zum Justieren von zumindest der Höheneinstellung zwischen einer ersten Transporteinrichtung (10) und einer zweiten Transporteinrichtung (20) in einer Transportstrecke für Vorformlinge für Kunststoffbehälter, wobei die erste Transporteinrichtung (10) zumindest eine Auslaufeinheit (12) zur Übernahme von Vorformlingen (13) von der zweiten Transporteinrichtung (20) sowie eine Schieneneinheit (11) zum Weitertransport der Vorformlinge (13) aufweist, wobei
die Auslaufeinheit (12) einerseits mit der Schieneneinheit (11) verbunden ist und andererseits frei beweglich gegenüber der zweiten Transporteinrichtung (20) angeordnet ist, und wobei die erste und die zweite Transporteinrichtung (10, 20) über eine Justiereinheit (30) miteinander verbunden sind, wobei mittels der Justiereinheit (30) zumindest die Auslaufeinheit (12) in ihrer Höhe gegenüber der zweiten Transporteinrichtung (20) verstellbar ist.

2. System gemäss Anspruch 1, **dadurch gekennzeichnet, dass** die Auslaufeinheit (12) der ersten Transporteinrichtung (10) eine Krümmung (14) aufweist.

3. System gemäss Anspruch 1 oder 2, **dadurch gekennzeichnet, dass** die Justiereinheit (30) einen beweglichen Schlitten (32) aufweist, welcher mit der ersten Transporteinrichtung (10) verbunden, vorzugsweise verschraubt, ist.

4. System gemäss einem der Ansprüche 1 bis 3, **dadurch gekennzeichnet, dass** die erste Transporteinrichtung (10) weiterhin ein Tragprofil (15) aufweist, welches ggf. oberhalb der Schieneneinheit (11) montiert ist.

5. System gemäss Anspruch 4, **dadurch gekennzeichnet, dass** der bewegliche Schlitten (32) mit dem Tragprofil (15) der ersten Transporteinrichtung (10) verbunden, vorzugsweise verschraubt, ist.

6. System gemäss einem der Ansprüche 3 bis 5, **dadurch gekennzeichnet, dass** der bewegliche Schlitten (32) an zumindest einer Führungsstange (31) der Justiereinheit (30) gelagert ist.

7. System gemäss Anspruch 6, **dadurch gekennzeichnet, dass** der bewegliche Schlitten (32) über eine Justierschraube (33) entlang der zumindest einen Führungsstange (31) bewegbar ist.

8. System gemäss Anspruch 7, **dadurch gekennzeichnet, dass** die Justierschraube (33) mit einer digitalen Anzeige (33a) versehen ist.

9. System gemäss Anspruch 7 oder 8, **dadurch gekennzeichnet, dass** die Justierschraube (33) der Justiereinheit (30) zwischen zwei Führungsstangen (31) verläuft entlang derer der bewegliche Schlitten (32) bewegt wird.

10. System gemäss einem der Ansprüche 3 bis 9, **dadurch gekennzeichnet, dass** der bewegliche Schlitten (32) eine im Wesentlichen H-förmige Ausgestaltung aufweist.

11. System gemäss einem der Ansprüche 1 bis 10, **dadurch gekennzeichnet, dass** die erste Transporteinrichtung (10) eine verstellbare Höhenführung (16) aufweist.

12. System gemäss Anspruch 11, **dadurch gekennzeichnet, dass** die Höhenführung (16) eine Justierschraube (17) aufweist, welche vorzugsweise mit einer digitalen Anzeige (17a) versehen ist.

13. System gemäss einem der Ansprüche 1 bis 12, **dadurch gekennzeichnet, dass** die erste Transporteinrichtung (10) eine Breiteneinstellung (18) aufweist, welche vorzugsweise mit einer digitalen Anzeige (18a) versehen ist.

14. System gemäss einem der Ansprüche 1 bis 13, **dadurch gekennzeichnet, dass** die Justiereinheit (30) zumindest über ein U-förmiges Verbindungsstück (34) fest mit der zweiten Transporteinrichtung (20) verbunden ist.

15. System gemäss einem der Ansprüche 1 bis 14, **dadurch gekennzeichnet, dass** die erste Transporteinrichtung (10) eine Ablaufschiene ist und die zweite Transporteinrichtung (20) ein Rollensortierer ist.

## Claims

1. System for adjusting at least the vertical setting between a first transport device (10) and a second transport device (20) in a transport section for preforms for plastic containers, the first transport device (10) having at least one outlet unit (12) for accepting preforms (13) from the second transport device (20) and a rail unit (11) for further transport of the preforms (13), the outlet unit (12) firstly being connected to the rail unit (11) and secondly being arranged such that it can be moved freely with respect to the second transport device (20), and the first and the second transport devices (10, 20) being connected to one another via an adjusting unit (30), it being possible for the height of at least the outlet unit (12) to be adjusted with respect to the second transport device (20) by means of the adjusting unit (30).

2. System as claimed in claim 1, **characterized in that** the outlet unit (12) of the first transport device (10) has a curvature (14).

3. System as claimed in claim 1 or 2, **characterized in that** the adjusting unit (30) has a movable carriage (32) which is connected, preferably screwed, to the first transport device (10).

4. System as claimed in one of claims 1 to 3, **characterized in that**, furthermore, the first transport device (10) has a support profile (15) which is optionally installed above the rail unit (11).

5. System as claimed in claim 4, **characterized in that** the movable carriage (32) is connected, preferably screwed, to the support profile (15) of the first transport device (10).

6. System as claimed in one of claims 3 to 5, **characterized in that** the movable carriage (32) is mounted on at least one guide bar (31) of the adjusting unit (30).

7. System as claimed in claim 6, **characterized in that** the movable carriage (32) can be moved along the at least one guide bar (31) via an adjusting screw (33).

8. System as claimed in claim 7, **characterized in that** the adjusting screw (33) is provided with a digital display (33a).

9. System as claimed in claim 7 or 8, **characterized in that** the adjusting screw (33) of the adjusting unit (30) runs between two guide bars (31), along which the movable carriage (32) is moved.

10. System as claimed in one of claims 3 to 9, **characterized in that** the movable carriage (32) has a substantially H-shaped configuration.

11. System as claimed in one of claims 1 to 10, **characterized in that** the first transport device (10) has an adjustable vertical guide (16).

12. System as claimed in claim 11, **characterized in that** the vertical guide (16) has an adjusting screw (17) which is preferably provided with a digital display (17a).

13. System as claimed in one of claims 1 to 12, **characterized in that** the first transport device (10) has a width setting means (18) which is preferably provided with a digital display (18a).

14. System as claimed in one of claims 1 to 13, **characterized in that** the adjusting unit (30) is connected fixedly to the second transport device (20) at least via a U-shaped connection piece (34).

15. System as claimed in one of claims 1 to 14, **characterized in that** the first transport device (10) is a running rail and the second transport device (20) is a roller sorter.

## Revendications

1. Système d'ajustage d'au moins le réglage de la hauteur entre un premier dispositif de transport (10) et un deuxième dispositif de transport (20) dans une section de transport de préformés pour des récipients en plastique, le premier dispositif de transport (10) présentant au moins une unité de sortie (12) pour la prise en charge des préformés (13) du deuxième dispositif de transport (20) et une unité de rail (11) pour le transport ultérieur des préformés (13), l'unité de sortie (12) étant d'une part connectée à l'unité de rail (11) et étant d'autre part disposée de telle sorte qu'elle est mobile librement par rapport au deuxième dispositif de transport (20), et le premier et le deuxième dispositif de transport (10, 20) étant connectés l'un à l'autre au moyen d'une unité d'ajustage (30), au moins l'unité de sortie (12) étant réglable en hauteur par rapport au deuxième dispositif de transport (20) au moyen d'une unité d'ajustage (30).

2. Système selon la revendication 1, **caractérisé en ce que** l'unité de sortie (12) du premier dispositif de transport (10) présente une courbure (14).

3. Système selon la revendication 1 ou 2, **caractérisé en ce que** l'unité d'ajustage (30) présente un chariot mobile (32) qui est connecté, préférablement vissé, au premier dispositif de transport (10).

4. Système selon l'une des revendications 1 à 3, **caractérisé en ce que** le premier dispositif de transport (10) présente en outre un profilé porteur (15) qui est optionnellement monté au-dessus de l'unité de rail (11).

5. Système selon la revendication 4, **caractérisé en ce que** le chariot mobile (32) est connecté, préférablement vissé, au profilé porteur (15) du premier dispositif de transport (10).

6. Système selon l'une des revendications 3 à 5, **caractérisé en ce que** le chariot mobile (32) est positionné sur au moins une barre de guidage (31) de l'unité d'ajustage (30).

7. Système selon la revendication 6, **caractérisé en ce que** le chariot mobile (32) est mobile le long d'au moins une barre de guidage (31) au moyen d'une vis d'ajustage (33).

8. Système selon la revendication 7, **caractérisé en ce que** la vis d'ajustage (33) est munie d'un affichage digital (33a).

9. Système selon la revendication 7 ou 8, **caractérisé en ce que** la vis d'ajustage (33) de l'unité d'ajustage (30) s'étend entre deux barres de guidage (31), le long desquelles le chariot mobile (32) est mobile.

10. Système selon l'une des revendications 3 à 9, **caractérisé en ce que** le chariot mobile (32) présente un arrangement essentiellement en forme de « H ».

11. Système selon l'une des revendications 1 à 10, **caractérisé en ce que** le premier dispositif de transport (10) présente un guide vertical ajustable (16) .

12. Système selon la revendication 11, **caractérisé en ce que** le guide vertical (16) présente une vis d'ajustage (17) qui est préférablement munie d'un affichage digital (17a).

13. Système selon l'une des revendications 1 à 12, **caractérisé en ce que** le premier dispositif de transport (10) présente un réglage de la largeur (18) qui est préférablement munie d'un affichage digital (18a).

14. Système selon l'une des revendications 1 à 13, **caractérisé en ce que** l'unité d'ajustage (30) est connecté de façon fixe au deuxième dispositif de transport (20) au moins au moyen d'une pièce de connexion (34) en forme de « U ».

15. Système selon l'une des revendications 1 à 14, **caractérisé en ce que** le premier dispositif de transport (10) est un rail d'évacuation et le deuxième dispositif de transport (20) est un trieur à rouleaux.
